Europäisches Patentamt

European Patent Office

Office européen des brevets

(19)

(11) Veröffentlichungsnummer: **0 156 186**
**A1**

# (12) EUROPÄISCHE PATENTANMELDUNG

(21) Anmeldenummer: **85102354.9**

(22) Anmeldetag: **01.03.85**

(51) Int. Cl.⁴: **G 01 N 3/08**

(30) Priorität: **21.03.84 CH 1416/84**

(43) Veröffentlichungstag der Anmeldung:
**02.10.85 Patentblatt 85/40**

(84) Benannte Vertragsstaaten:
**CH DE FR GB IT LI**

(71) Anmelder: **Schleuniger, Kurt, Dr.**
**im Rychenbach**
**CH-4574 Nennigkofen(CH)**

(72) Erfinder: **Schleuniger, Kurt, Dr.**
**im Rychenbach**
**CH-4574 Nennigkofen(CH)**

(72) Erfinder: **Hermann, Peter, Dr.**
**Haldenstrasse 33**
**CH-2555 Brügg bei Biel(CH)**

(74) Vertreter: **Troesch, Hans Alfred, Dr. Ing. et al,**
**Walchestrasse 19**
**CH-8035 Zürich(CH)**

(54) Verfahren zur Prüfung der mechanischen Beanspruchbarkeit einer Materialprobe, Vorrichtung zur Ausführung des Verfahrens und Verwendung des Verfahrens.

(57) Zur Prüfung der mechanischen Beanspruchbarkeit von Materialproben wird die Bewegung zweier Backen (1, 7) über die Probe (15) bewegungsgekoppelt. Die in Bewegungsrichtung liegende Backe (7) erfährt eine in ihrer Lage variierende Kraft (F), die sich als Beanspruchung auf die Probe überträgt. Der probenbruchmoment wird detektiert und unter Kenntnis der Abhängigkeit zwischen Pewegung der kraftbeaufschlagten Backe (7) und besagter Kraft wird die dann vorliegende Probenbelastung berechnet (19). Aus der hierzu notwendigen Verschiebungswegerfassung, möglicherweise auch Zeiterfassung bei vorgegebener Vorschubgeschwindigkeit, wird weiter der Bewegungsablauf der Backen (1, 7) gesteuert.

FIG.1

Verfahren zur Prüfung der mechanischen Beanspruchbarkeit einer Materialprobe, Vorrichtung zur Ausführung des Verfahrens und Verwendung des Verfahrens

Die vorliegende Erfindung betrifft ein Verfahren zur Prüfung der mechanischen Beanspruchbarkeit einer Materialprobe, bei welchem über die Probe die Bewegung zweier Backen gekoppelt wird und die eine Backe als Belastungsbacke mit einer mit ihrer Lage variierenden Kraft auf die Probe rückwirkt sowie eine Vorrichtung zur Ausführung des Verfahrens, wobei die Belastungsbacke mit einem krafterzeugenden Organ gekoppelt ist und eine Verwendung des Verfahrens.

Derartige Verfahren werden bekanntlich zur Prüfung von Materialproben, wie beispielsweise der Druckfestigkeit von Tabletten, aber auch anderer Proben, wie elektronischer Bauteile, verwendet. So ist es beispielsweise aus der CH-PS 523 499 desselben Anmelders bekannt, derartige Materialproben, insbesondere Tabletten, zwischen zwei Backen einzulegen, wovon die eine vorgetrieben wird, bis sie die Tablette berührt. Danach sind die beiden Backen über die Tablette bewegungsgekoppelt. Die zweite Backe wird nun mitverschoben und verschiebt dabei ein Schwerependel aus seiner vertikalen Ruhelage. Dieses wirkt somit mit einer, mit der Backenlage variierenden Kraft auf die Tablette. Mit Hilfe einer entsprechend skalierten Schleppzeigeranordnung wird registriert, wann und bei welcher Pendelauslenkung die Materialprobe, hier insbesondere die Tablette, bricht.

Es sind auch andere Verfahren bekannt, bei welchen die lageabhängige Kraft durch Federanordnungen erzeugt wird. Nachteilig bei diesen beiden Verfahren ist es, dass eine eindeutige Zuordnung der Lage der kraftbeaufschlagten Backe und der dabei eingetretenen Probenbeanspruchung aufwendig und/oder wenig exakt ist. Im weiteren tritt bei den bekannten Verfahren das Problem auf, dass sie nicht in dem Sinne zeitoptimal ausgelegt arbeiten, als dass die Bewegungen der Backen, sei dies im Vorschubzyklus, insbesondere bis zur Kontaktierung der Materialprobe, d.h. bis zur bewegungsmässigen Kopplung der beiden Backen über die Materialprobe, und/oder im Backenrückholzyklus, nicht so angesteuert werden, dass die Messungen möglichst rasch, jedoch ohne Verfälschungen vorgenommen werden, was sowohl eine Zeitoptimierung im Zustellzyklus, wie auch im Rückholzyklus bedingen würde. Dabei ist jedoch zu berücksichtigen, dass das Inkontaktreten der vorgetriebenen Backe mit der Materialprobe so sanft erfolgen sollte, dass nicht bereits der Berührungsimpuls, insbesondere bei spröden Materialproben, zu allenfalls nicht sichtbaren Brucherscheinungen führt, die das Resultat verfälschen würden.

Die vorliegende Erfindung bezweckt, das eingangs genannte Verfahren und die entsprechenden Vorrichtungen derart weiter zu bilden, dass die obgenannten Nachteile behoben werden, d.h. eine exakte Bruchbelastungsmessung ermöglicht wird, mit relativ geringem Aufwand und eine zeitoptimale Bewegungssteuerung der Backen ermöglicht wird.

Dies wird dadurch erreicht, dass man den Verschiebungsweg mindestens einer der Backen bestimmt und aus der Kenntnis der Lage-Kraftabhängigkeit der Belastungsbacke, mindestens unmittelbar vor dem Probenbruch die dann auf die
Probe rückwirkende Kraft berechnet und/oder aus der Verschiebungswegerfassung und allenfalls Kenntnis der Geschwindigkeitsverhältnisse der einen und/oder anderen
Backe, deren Bewegung steuert.

Durch Bestimmung des Verschiebungsweges der Belastungsbacke und Berechnung der auf die Probe rückwirkenden Kraft
aus der Kenntnis der Lage-Kraftabhängigkeit, mindestens
unmittelbar vor dem Probenbruch, wird eine exakte, reproduzierbare Bruchbelastungserfassung möglich.

Wird dabei der Verschiebungsweg direkt oder indirekt über
eine Zeitmessung bei bekannten Geschwindigkeitsverhältnissen beider Backen erfasst, so ergibt sich die Möglichkeit
Weg/Kraft/Prüfungen, wie Spannungs/Dehnungs-Prüfungen
oder Weg/Kraft/Zeit-Prüfungen, wie Wechselbelastungsprüfungen, vorzunehmen.

Alternativ oder kumulativ wird weiter dadurch, dass aus
der direkten oder indirekten Verschiebungswegerfassung
und allenfalls Kenntnis der Geschwindigkeitsverhältnisse der einen und/oder anderen Backe deren Bewegung gesteuert wird, grundsätzlich sowohl im Rückhol- wie auch
im Vorschubzyklus eine zeit-optimale Backenbewegungssteuerung möglich und zwar deshalb mit relativ geringem
Aufwand, weil hierzu nur eine Wegerfassung an der einen
Backe nötig ist.

Der Bruchzeitpunkt wird dabei vorzugsweise durch Detektion einer vorgegebenen zeitlichen Unstetigkeit des erfassten Verschiebungsweges detektiert, was wiederum eine Systemvereinfachung mit sich bringt, indem die dann ohnehin vorzusehende direkte Verschiebungswegerfassung auch zur Bruchzeitpunkts-Detektion eingesetzt werden kann.

Die Rückholbewegung der anderen Backe, d.h. der vorgetriebenen, wird dadurch optimiert, dass man aus der Bestimmung des Verschiebungsweges der Belastungsbacke, bis unmittelbar vor Probenbruch und Vorgabe der Rückholgeschwindigkeit der anderen, d.h. vorgetriebenen Backe, über Ermittlung ihrer Rücklaufzeit, ihren Rücklauf steuert.

M.a.W. wird vorzugsweise ab dem Zeitpunkt, in welchem die beiden Backen über die Probe bewegungsgekoppelt sind, der Verschiebungsweg des ganzen Systems direkt oder über eine Zeitmessung, entsprechend demjenigen der Belastungsbacke, gemessen bis unmittelbar vor den Probenbruch resp. dem Einsetzen des Probenbruches, und es wird aus dieser Weggrösse und Vorgabe der Rückholgeschwindigkeit der Antriebsbacke die Zeit ermittelt, während welcher bei der erwähnten Rückholgeschwindigkeit letztere rückgeholt werden muss.

Dabei wird vorzugsweise die Rücklaufzeitspanne der anderen Backe, der angetriebenen, berechnet, und es wird eine Toleranzzeitspanne, wie entsprechend der geometrischen Probenausdehnungs- und -bruchwegtoleranz, hinzuaddiert, wobei während der Totalzeitspanne die erwähnte andere Backe mit vorgegebener Geschwindigkeit rückgeholt wird, z.B. derart, dass für das Einlegen der nächsten Probe ein vorgegebener Backenabstand wieder eingenommen wird.

Für die Optimierung der Vorschubbewegung wird vorzugsweise so vorgegangen, dass man ein Geschwindigkeits/Vorschubweg oder -Vorschubzeit-Profil der anderen Backe für
ihren Vorschub bei einer Probe vorgibt und das Profil
nach Massgabe eines Backen/Probenkontaktierungs-Kriteriums
bei dieser Probe für die nächste Probe adaptiv optimiert.

Dabei wird vorzugsweise so vorgegangen, dass man ein Geschwindigkeits/Vorschubweg- oder -Vorschubzeit-Profil
der anderen Backe für ihren Vorschub bei einer Probe vorgibt, deren Verschiebungsbeginn-Zeitpunkt registriert,
einen Zeitpunkt bei oder nach Verschiebungsbeginn der
Belastungsbacke registriert und adaptiv für die nächste
Probe, unter Berücksichtigung von Probentoleranzen aus
Kenntnis der Zeitpunktdifferenzspanne und des Profils
bei der einen Probe, das Profil für die nächste Probe
korrigiert, zur Zeitoptimierung des Vorschubes der anderen Backe und Einhaltung eines vorgegebenen Berührungsimpulses zwischen den Backen und der jeweiligen Probe.

Eine Vorrichtung wie zur Ausführung des Verfahrens, bei
der die Belastungsbacke mit einem lageabhängig krafterzeugenden Organ gekoppelt ist, weist mindestens für eine
der Backen eine Wegmesseinrichtung zur Direktmessung des
Weges oder zur Verschiebungszeitmessung und via Geschwindigkeit zur indirekten Wegmessung auf.

Zur Erzeugung einer exakten Anzeige für die Probenbruchbelastung wird der Ausgang der Wegmesseinrichtung einer
als Funktionsgenerator wirkenden Auswerteeinheit als Eingang zugeführt, wobei die Auswerteeinheit ein der auf
die Belastungsbacke wirkenden Kraft proportionales Signal
in Funktion des Wegmesseinrichtungs-Ausgangssignals abgibt.

Um ein hochstabiles, weitestgehend ermüdungsfreies krafterzeugendes Organ zu schaffen, wird letzteres vorzugsweise durch ein durch Verschiebung der Belastungsbacke aus der Vertikalen aufgeschwenktes Schwerependel realisiert. Dann wird die Wegmesseinrichtung einfacherweise als Winkelaufnehmer am Pendel ausgebildet.

Zur Berücksichtigung der Schwenkwinkelabhängigkeit der auf die Probe wirkenden Kraft wird nun die Auswerteeinheit mit einer Sinus-Funktionseinheit versehen, deren Eingang mit dem Ausgang des Winkelaufnehmers verbunden ist.

Zur Berücksichtigung, dass unter Umständen die Messvorrichtung nicht so aufgestellt ist, dass die Pendelvertikale mit der Nullablesung des Winkelaufnehmers übereinstimmt, wird vorgeschlagen, dass die Auswerteeinheit eine der Sinusfunktionseinheit vorgeschaltete Ueberlagerungseinheit umfasst, an der dem Ausgangssignal des Winkelaufnehmers ein einer Offset-Winkelgrösse entsprechendes Signal hinzuaddiert wird, zur Berücksichtigung der relativen Winkellage zwischen Backen-Bewegungsbahn und Vertikalen.

Zur Eichung der Vorrichtung wird dabei vorgeschlagen, dass die Auswerteeinheit ein Speicherelement für das Offset-Winkelgrössen-Signal umfasst, wobei vorzugsweise dieses Signal in Ruhelage der Vorrichtung vom Ausgang des Winkelaufnehmers aufnehmbar ist. Damit wird ermöglicht, dass das Gerät aufgestellt wird und die sich dann einstellende Abweichung zwischen Pendelvertikallage und Nullposition des Winkelaufnehmers als Offsetpositionierungsabweichung in den Speicher aufgenommen wird, zur nachträglichen Berücksichtigung bei der Bruchbelastungsberechnung. Ist die Belastungsbacke mittels einer Umlenkmechanik mit dem Pendel bewegungsgekoppelt, was üblicherweise der Fall sein wird, so wird die Auswerteinheit mit einer Linearisierungsfunktionseinheit versehen, welcher das Ausgangssignal des Winkelaufnehmers zugeführt ist und deren Ausgangssignal als schwenkwinkelabhängiger Faktor mit dem Ausgangssignal der Sinusfunktionseinheit an einer Gewichtungseinheit verbunden ist. Damit können die Pendelschwenklage abhängigen, geometrischen Uebertragungsverhältnisse zwischen Backe und Pendel berücksichtigt werden, was zu einer exakten Berechnung der Bruchbelastung führt.

Wird der Ausgang der Wegmesseinrichtung auf eine Speichereinrichtung geführt, zur Abspeicherung eines Signals der Wegmesseinrichtung, entsprechend dem durch die Belastungsbacke, der kraftbeaufschlagten, bis zum Probenbruch durchlaufenen Weg oder der dafür benützten Zeitspanne, bei gegebenem Geschwindigkeitsverlauf und der Ausgang der Speichereinrichtung über eine Gewichtungseinheit, der als Gewichtungsfaktor ein der Rückholgeschwindigkeit der anderen Backe, nämlich der angetriebenen, entsprechendes Signal zuführbar ist, an einem Zeit- oder Weg-Steuereingang über einen Antrieb für die andere Backe geführt und steuert deren Rückholung, so wird erreicht, dass mit der vorgesehenen Wegmesseinrichtung auch nur an der Belastungsbacke die Rückholbewegung der anderen, angetriebenen Backe optimal gesteuert werden kann.

Vorzugsweise wird dabei eine einstellbare Verstelleinrichtung, wie eine Zeitverstelleinrichtung, vorgesehen, um den Rückholweg extern zu verlängern, womit die angetriebene Backe nicht nur während der Zeitdauer mit vorgegebener Rückholgeschwindigkeit rückgeholt wird, die dem Verschiebungsweg der Belastungsbacke entspricht, sondern länger, derart, dass einerseits Probentoleranzen berücksichtigt werden können, anderseits sichergestellt werden kann, dass im Ruhezustand der Vorrichtung zwischen den Backen für das Einlegen der Probe genügend Zwischenraum eingehalten wird. Es wird also der Verschiebungsweg der Belastungsbacke bis zum Bruch der Probe gemessen, daraus, durch Division dieses Wegabschnittes durch die Rückholgeschwindigkeit der angetriebenen Backe der Zeitabschnitt ermittelt, währenddem letztere, bei dieser Geschwindigkeit mindestens rückzuholen ist oder es wird anstelle des Wegabschnittes, die dafür notwendige Zeit gemessen und unter Kenntnis der Vorschub- und Rückholgeschwindigkeitsverhältnisse der erwähnte Zeitabschnitt ermittelt.

Wird eine Zeitmesseinrichtung vorgesehen, die den Zeitabschnitt zwischen Verschiebungsbeginn der andern Backe, d.h. der angetriebenen, und demjenigen bei oder nach der Belastungsbacke bei der Prüfung der Probe registriert und festhält, und wirkt der Ausgang dieser Zeitmesseinrichtung auf eine Geschwindigkeit/Vorschubweg- oder -/Vorschubzeit-Profil-Steuereinheit für einen Antrieb für die andere Backe, die angetriebene, wobei die Zeitmesseinrichtung mit dem für die eine Probenprüfung ermittelten Zeitabschnitt das Vorschub-Geschwindigkeitszeitprofil der anderen Backe, der getriebenen, bei der nächsten Probenprüfung steuert, so wird erreicht, dass adaptiv aus der Messung, wie lange es dauert, bis die getriebene Backe ab Verschiebungsbeginn die Probe z.B. berührt, bei der einen Probe, das Profil beim Vorschub dieser Backe für die nächste Probe ermittelt und der Antrieb dann entsprechend angesteuert wird. Damit werden ein zeitoptimaler Vorschub und die Einhaltung eines maximal tolerierten Berührungsimpulses zwischen getriebener Backe und Probe sichergestellt.

Wie bereits erwähnt, ist z.B. beim vorgeschlagenen Verfahren und z.B. der vorgeschlagenen Vorrichtung die eine Backe angetrieben und wirkt über die Probe auf die Belastungsbacke. Erfolgt nun der Probenbruch, so wird, ohne Vorsehen geeigneter Massnahmen, die Belastungsbacke schlagartig auf die Antriebsbacke zurückschnellen, mindestens so weit es die dazwischenliegenden Probenbruchstücke erlauben, oder es wird, falls die angetriebene Backe bereits zurückgeholt worden ist, was mit grosser Geschwindigkeit möglich ist, die Belastungsbacke ungebremst in ihre Ausgangslage zurückschnellen. Dies führt, je nach den vorgesehenen Massen, zu grossen mechanischen Impulsen mit entsprechenden mechanischen Beanspruchungen.

Um dies zu verhindern, wird nun vorgeschlagen, dass man den Bruch der Probe detektiert und die Belastungsbacke mit gesteuerter oder geregelter Beschleunigung in ihre Ruhelage rückführt. Steuert man dabei die Beschleunigung, abhängig vom Verschiebungsweg der Belastungsbacke, so wird zudem vorzugsweise der Verschiebungsweg der Belastungsbacke bereits vor dem Probenbruch detektiert und letzterer durch Auftreten einer vorgegebenen zeitlichen Unstetigkeit im Backenverschiebungsweg erfasst.

Die Vorrichtung wird hierzu so ausgebildet, dass für die Belastungsbacke eine Rückhol-Beschleunigungs-Steuervorrichtung vorgesehen ist, oder eine Rückhol-Regelung mit der Vorrichtung als Stellglied, wobei vorzugsweise die Steuervorrichtung eine Bremsvorrichtung ist, die eine von der Backenlage abhängige Bremskraft ausübt, oder eine Bremskraft vorgegebener Zeitabhängigkeit erzeugt.

Soll die Bremskraft gesteuert werden, so wird vorgeschlagen, dass der Ausgang einer Wegmesseinrichtung mindestens zeitweilig auf einen Steuereingang einer Beschleunigungssteuervorrichtung für die Belastungsbacke wirkt.

Vorzugsweise ist dabei das krafterzeugende Organ ein durch Verschiebung der Belastungsbacke aus der Vertikalen aufgeschwenktes Schwerependel und die Beschleunigungssteuervorrichtung eine am Pendel angreifende Bremse.

Vorzugsweise umfasst die Bremse eine in einer Ebene parallel zur Pendelschwenkebene an letzterem angreifende Friktionsplatte, mindestens in einer Komponente senkrecht zu dieser Ebene verschieblich, wobei die Platte bei gesteuerter Bremsung mit einem steuerbaren Antrieb verbunden ist, wie mit einem elektromagnetischen Linearantrieb, oder mit einer Zeitsteuereinheit zur Steuerung einer vorgegebenen Zeitfunktion der Bremskraft.

Die Wegmesseinrichtung wird dabei vorzugsweise als Winkelaufnehmer am Pendel ausgebildet und ist mit einer Differenziationseinheit verbunden, deren Ausgang einer Komparatorschaltung zugeführt ist, vorzugsweise mit einstellbarem Referenzwert, wobei der Ausgang der Komparatorschaltung die Bremse sperrt oder für gesteuerte Inbetriebnahme freigibt.

Mit Hilfe der Differenziationseinheit mit nachgeschalteter Komparatorschaltung wird der Probenbruch und die damit erfolgende zeitliche Unstetigkeit in der Wegaufnahme detektiert, dann die Bremse vom gesperrten in gesteuert aktivierten Zustand geschaltet.

Dadurch, dass man für Druck/Weg- oder Druck/Weg/Zeit-Materialprüfung den Verschiebungsweg beider Backen direkt oder indirekt misst resp. beiden Backen je eine Wegmesseinrichtung hierzu zuordnet, wird eine Vielzahl dynamischer Prüfungen möglich, wie von Spannungs/Dehnungs-Prüfungen oder Wechselbeanspruchungs-Prüfungen.

Die Erfindung wird anschliessend beispielsweise anhand von Figuren erläutert.

Es zeigen:

Fig. 1    schematisch den Aufbau einer erfindungsgemässen Vorrichtung zur Druckbelastungsprüfung von Materialproben,

Fig. 2    ein Funktionsblockschema zur Bruchzeitpunkts-Detektion an der Vorrichtung gemäss Fig. 1,

Fig. 3    schematisch eine mit einem Schwerependel gekoppelte Backe und die dabei zu berücksichtigenden geometrischen Grössen, an einer bevorzugten Ausführungsvariante der Vorrichtung gemäss Fig. 1,

Fig. 4    ein Funktionsblockdiagramm einer Auswerteeinheit an einer Vorrichtung mit Schwerependel
gemäss Fig. 3,

Fig. 5    ein Funktionsblockdiagramm einer Linearisierungseinheit in der Auswerteeinheit gemäss
Fig. 4,

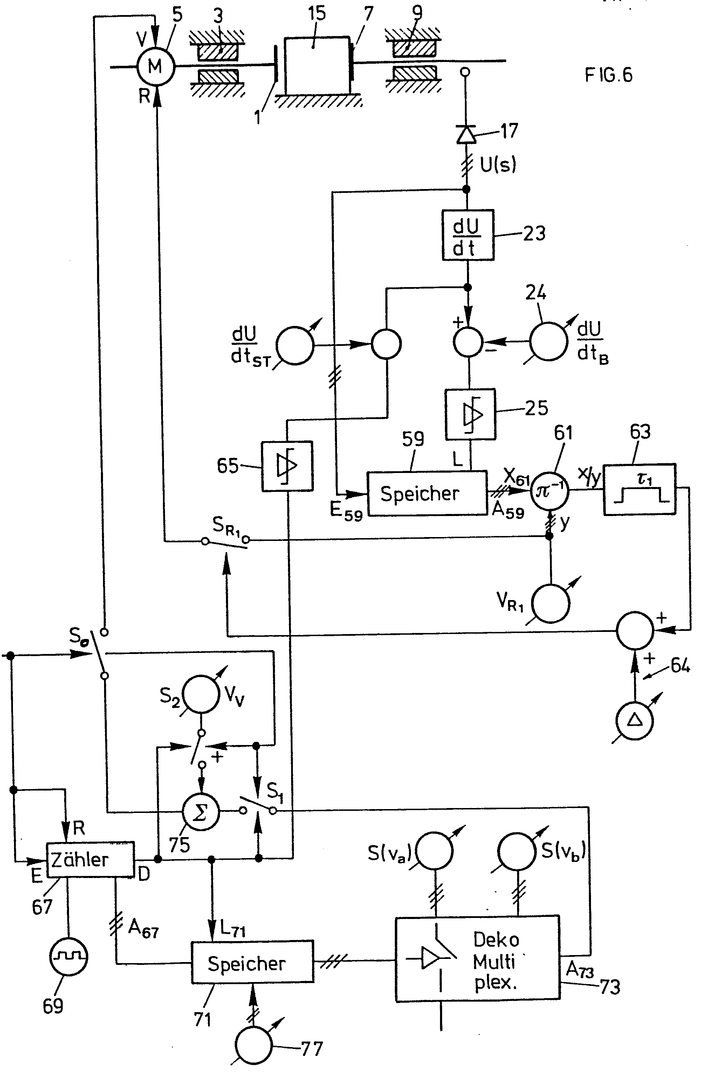

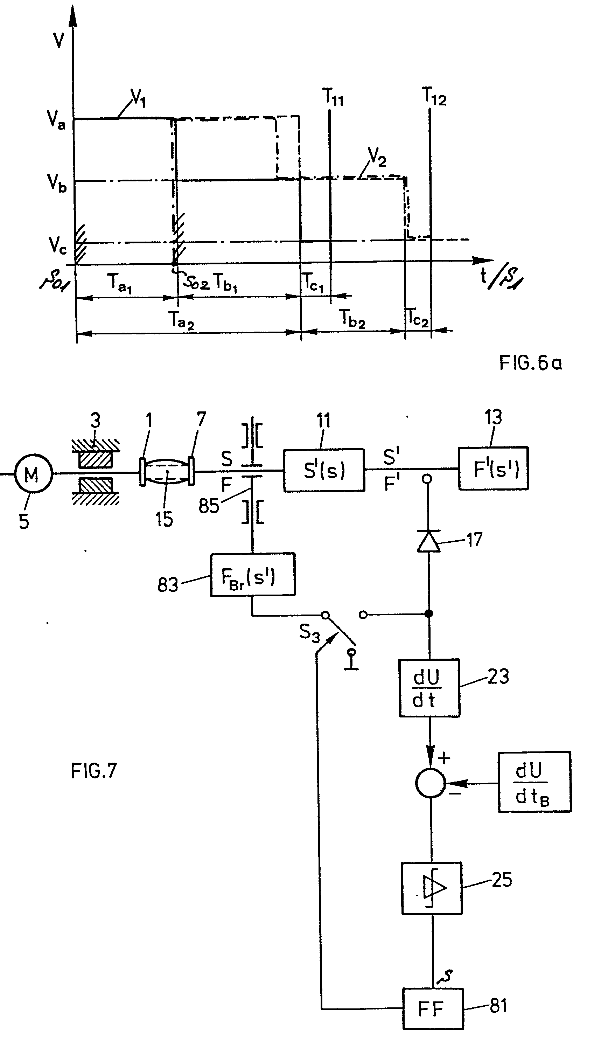

Fig. 6    ein Funktionsblockdiagramm einer erfindungsgemässen Vorrichtung mit den Funktionsblöcken
zur Steuerung der Backenvorschub- resp. Rückhol-Bewegungen,

Fig. 6a   in einem Geschwindigkeits-Zeitdiagramm die
beispielsweise Ansteuerung des Antriebsbackenvorschubs gemäss zwei unterschiedlichen Vorschubzeitspannen der kraftbeaufschlagten Backe
an der Anordnung gemäss Fig. 6,

Fig. 7    ein Blockdiagramm einer erfindungsgemässen
Vorrichtung mit den Funktionsblöcken zur gesteuerten Bremsung der Backenrückhol-Bewegung,

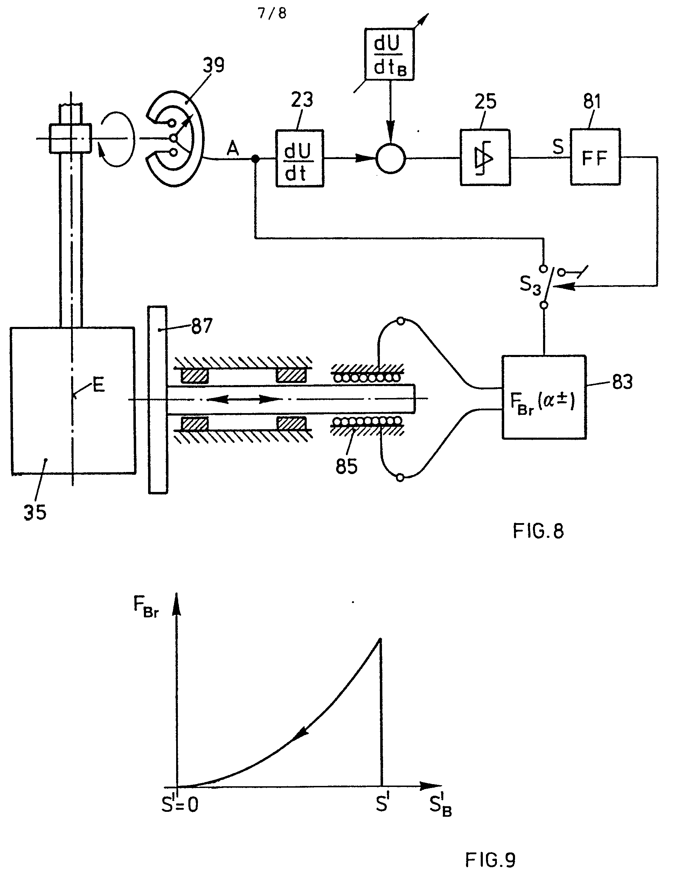

Fig. 8    ein detaillierteres Blockdiagramm der Vorrichtung gemäss Fig. 7 mit Schwerependel,

Fig. 9    in einem Weg/Kraft-Diagramm der beispielsweise mit der Anordnung gemäss Fig. 8 realisierte Verlauf der Bremskraft,

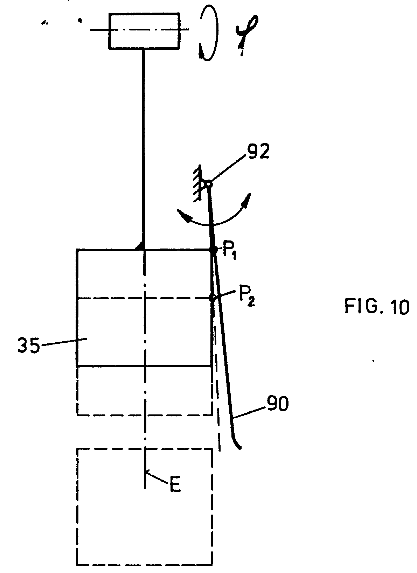

Fig. 10   eine schematische Darstellung zur wegvariablen Bremsung der Backenrückhol-Bewegung.

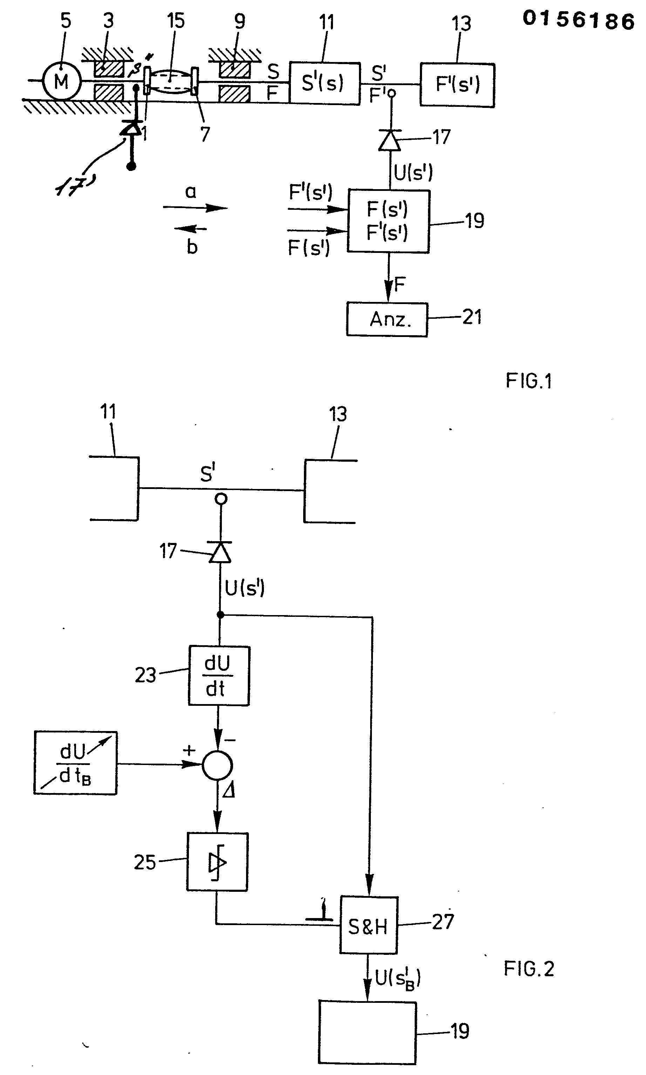

In Fig. 1 ist schematisch eine erfindungsgemässe Vorrichtung dargestellt. Sie umfasst eine angetriebene Backe 1, in Längsführungen 3 verschieblich gelagert und mit einem Antriebsmotor 5 verbunden. Weiter ist eine Gegenbacke 7 vorgesehen, ebenfalls längsverschieblich in Führungen 9 gelagert, die über eine Umlenkmechanik 11, wie ein Getriebe oder ein Gestänge, auf eine Krafterzeugungseinheit 13 wirkt. Der Verschiebungsweg der Backe 7, wegen ihrer Kraftbeaufschlagung im weiteren als kraftbeaufschlagte Backe bezeichnet, ist mit s bezeichnet, die auf die kraftbeaufschlagte Backe 7 wirkende Kraft in Verschiebungs-Gegenrichtung mit F. Die Umlenkmechanik 11 wandelt den durch die kraftbeaufschlagte Backe 7 durchlaufenen Weg S nach vorgegebener Funktion in den Weg s'(s) ausgangsseitig, und wirkt mit dieser Verschiebung auf das Krafterzeugungsorgan 13, beispielsweise ein Federorgan, oder, wie noch zu beschreiben sein wird, bevorzugterweise auf ein aus der Vertikalen ausgelenktes Schwerependel. Das Krafterzeugungsorgan 13 wirkt mit der Kraft F'(s') in Funktion der Ausgangsverschiebung s' der Uebertragungsmechanik 11, ausgangsseitig auf letztere zurück, die Uebertragungsmechanik 11 überträgt diese Kraft mit gegebener Uebertragungsfunktion als Kraft F wiederum auf die kraftbeaufschlagte Backe 7. Zwischen den Backen 1 und 7 wird eine zu prüfende Materialprobe 15 eingelegt.

Erfindungsgemäss wird nun generell der Verschiebungsweg mindestens der kraftbeaufschlagten Backe 7, sei dies s oder s', wie in Fig. 1 eingetragen, mit einem Wegdetektor 17, vorzugsweise einem mechanisch/elektrischen Wandler, wie einem Potentiometer, abgegriffen und es er-

0156186

scheint am Ausgang des Wegdetektors 17 ein dem erfassten Verschiebungsweg, hier s', proportionales elektrisches Signal U(s'). Dieses Signal wird einem Funktionsgenerator 19 zugeführt, in welchem die Abhängigkeit der Kraft F' des krafterzeugenden Organs 13 von seinem eingangsseitigen Verschiebungsweg s' abgespeichert ist, ebenso wie die Abhängigkeitsfunktion der auf die Backe 7 wirkenden und damit auf die Probe 15 rückwirkenden Kraft F, in Abhängigkeit der Verschiebung s', ausgangsseitig der Uebertragungsmechanik 11. Mit dem dem momentan zurückgelegten Verschiebungsweg der kraftbeaufschlagten Backe 7 entsprechenden Signal U(s') als Eingangsgrösse, ermittelt der Funktionsgenerator 19 nach Massgabe der erwähnten abgespeicherten Funktionen die momentane Probenbelastung F und gibt sie ausgangsseitig generell an einer Anzeige 21 resp. einem Registriergerät aus. Der Verschiebungsweg s' kann dabei auch durch eine Zeitmessung bei bekannter Vorschubgeschwindigkeit indirekt ermittelt werden.

Es ist nun wesentlich, dass die die Probe 15 beanspruchende Kraft F dann angezeigt wird, wenn die Probe 15 bricht. Dies wird gemäss Fig. 2 dadurch erreicht, dass das Ausgangssignal des Wegdetektors 17, U(s') einer Differenziationseinheit 23 zugeführt wird. Unter Berücksichtigung, dass im Moment des Probenbruches die kraftbeaufschlagte Backe 7, vorgängig in der in Fig. 1 mit a eingetragenen Richtung bewegt, nach Massgabe der Reduktion der Probenausdehnung, in Richtung b gegen die Antriebsbacke 1 kraftgetrieben zurückschnellt, wird aus der Ueberwachung der zeitlichen Ableitung des Ausgangssignals des Wegdetektors 17 der Bruchzeitpunkt ermittelt, indem diese zeitliche Ableitung $\frac{dU}{dt}$ an einer Komparatorschaltung 25 mit einer vorgegebenen resp. vorgebbaren, als signifikant für den Probenbruch erkannten zeitlichen Ab-

leitung $\frac{dU}{dt}$B verglichen wird. Ueberschreitet die ermittelte zeitliche Ableitung des Ausgangssignals des Wegdetektors 17 den vorgegebenen Wert, so aktiviert der Komparator 25,beispielsweise mit einem Ausgangsimpuls eine Speicherschaltung 27, beispielsweise S & H-Schaltung, womit der dann momentan anliegende Ausgangssignalwert des Wegdetektors 17 übernommen und als bruchspezifisches, wegentsprechendes $U(s'_B)$ dem Funktionsgenerator 19 zugeführt wird.

Wie bereits anhand von Fig. 1 erläutert, ermittelt der Funktionsgenerator 19 daraus die dann vorherrschende Probenbelastung F und gibt sie auf die Anzeige oder ein Registriergerät aus. Es versteht sich dabei von selbst, dass weitere Auswertungen, wie Führen von Statistiken etc. mit diesen Werten möglich sind. Interessieren im weiteren auch Probendehnungen bei der Beanspruchung oder sollen Wechselbeanspruchungsprüfungen vorgenommen werden, so wird auch der Verschiebungsweg s" der Backe 1 mit einem zweiten Wegdetektor 17' gemessen. Auch diese Wegerfassung kann indirekt durch Zeitmessung bei Kenntnis der Vorschubgeschwindigkeitsverhältnisse erfolgen.

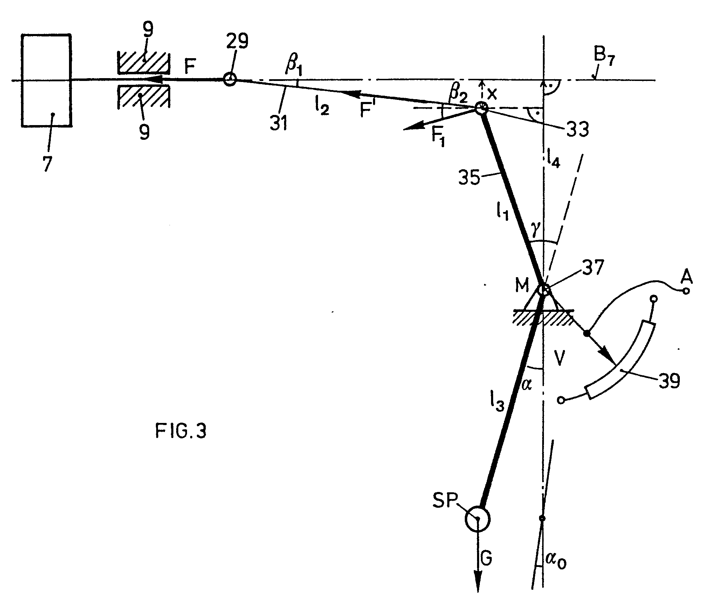

In Fig. 3 ist nun beispielsweise eine Realisationsform der Uebertragungsmechanik 11 und des krafterzeugenden Organs 13 dargestellt und die Grössen, welche zur Ermittlung der in Fig. 1 definierten oder analogen Funktionen führen. Die kraftbeaufschlagte Backe 7, in den Lagern 9 horizontal geführt, wirkt über ein Gelenk 29 auf einen Uebertragungshebel 31 der Länge $l_2$, welch letzterer an einem Gelenk 33 mit einem Pendel 35 verbunden ist. Das Gewicht des Pendels 35, G, ist im Pendel-Schwerpunkt SP angreifend eingetragen und das Pendel 35 ist an einem Lager 37 schwenkbar gelagert. Der Abstand zwischen Pendel-Schwerpunkt SP und Pendellager 37 ist mit $l_3$ bezeichnet, der Abstand zwischen Pendellager 37 und Gelenk 33 mit $l_1$. Das Pendel 33 wirkt als das in Fig. 1 als krafterzeugendes Organ 13 bezeichnete Organ, der Verbindungshebel 31 als Uebertragungsmechanik 11. Bezeichnet man mit $\alpha$ die Abweichung des Pendelarmes $l_3$ von der Vertikalen V und mit $\alpha_o$ die Abweichung der Vorrichtungssenkrechten VS bezüglich der Vertikalen V, so ergibt sich das durch das Gewicht G des Pendels mit Bezug auf sein Lager 37 ausgeübte Drehmoment zu:

$$M = G \cdot l_3 \cdot \sin(\alpha - \alpha_o) \tag{1}$$

Damit ergibt sich eine Kraft $F_1$ senkrecht zum Pendelarm $l_1$, wie eingetragen, zu:

$$F_1 = M/l_1 \tag{2}$$

Bezeichnet $l_4$ den Abstand des Pendelgelenkes 37 zur Bewegungsbahn $B_7$ der Backe 7 und $\gamma$ die starre Winkellage des Pendelarmes $l_1$ mit Bezug auf den Pendelarm $l_3$, so ergibt sich der Abstand des Gelenkes 33 von der Backenbahn $B_7$ in Funktion zur Pendelschwenkung zu:

$$x = l_4 - l_1 \cdot \cos(\gamma - \alpha) \tag{3}$$

Damit wird der Winkel zwischen dem Uebertragungshebel 31 und der Bewegungsbahn $B_7$, $\beta_1$

$$\beta_1 = \arcsin(x/l_2) \tag{4}$$

der Winkel zwischen der Kraft $F_1$ und dem Uebertragungshebel 31, $\beta_2$:

$$\beta_2 = \beta_1 + \gamma - \alpha . \tag{5}$$

Daraus ergibt sich für $\beta_1$:

$$\beta_1 = \text{arc sin } \frac{l_4 - l_1 \cdot \cos(\gamma-\alpha)}{l_2} \tag{6}$$

Die in Richtung des Uebertragungshebels 31 wirkende Kraft F', also gemäss Fig. 1 die Kraft, die zwischen dem Krafterzeugungsorgan 13, hier dem Pendel, 35 und der Uebertragungsmechanik 11, hier dem Uebertragungshebel 31, wirkt, ergibt sich zu:

$$F' = F_1/\cos \beta_2 \tag{7}$$

Daraus ergibt sich für die Kraft F, die gemäss Fig. 1 von der Uebertragungsmechanik 11, hier dem Uebertragungshebel 31 auf die Backe 7 wirkt, mit

$$F = F_2/\cos \beta_1 \tag{8}$$

und unter Berücksichtigung von (6) die Abhängigkeit

$$F = G \frac{l_3}{l_1} \frac{\cos \beta_1}{\cos(\beta_1+\gamma-\alpha)} \cdot \sin(\alpha-\alpha_0) \tag{9}$$

vom Schwenkwinkel $\alpha$ des Pendels analog zur Weggrösse S' von Fig. 1.

Wie in Fig. 3 schematisch eingetragen, wird nun der Schwenkwinkel $\alpha$, unter Berücksichtigung von der Lage-

abweichung $\alpha_o$, mit einem Winkelnehmer, beispielsweise einem Potentiometer 39 abgegriffen, dessen Mittenabgriff mit dem Pendel um das Pendellager 37 schwenkt.

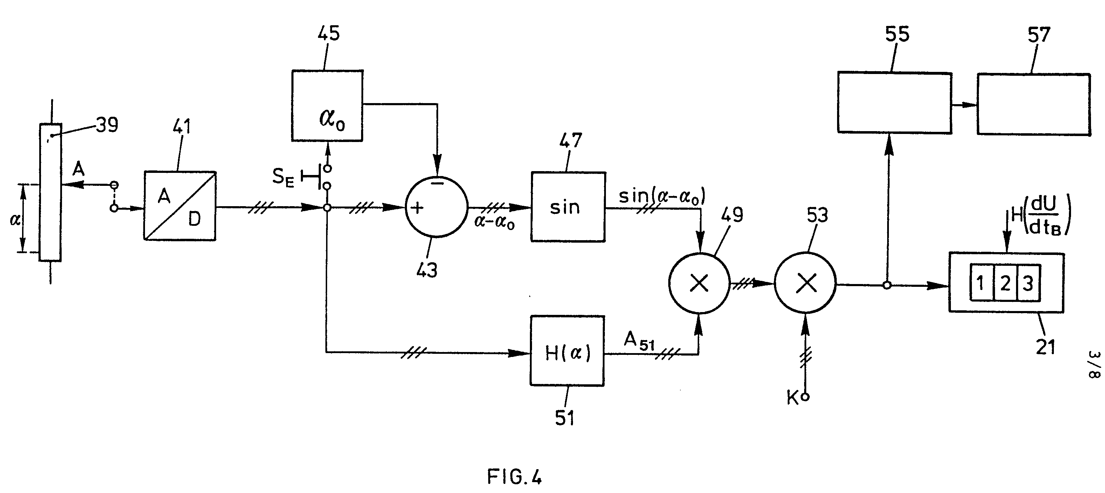

In Fig. 4 ist der aus den anhand von Fig. 3 gefundenen Funktionen sich ergebende Aufbau des Funktionsgenerators 19 von Fig. 1 dargestellt. Vom Potentiometer 39 wird gemäss Fig. 3 am Abgriff A, ein dem Schwenkwinkel $\alpha$ entsprechendes elektrisches Signal abgegriffen und einem Analog/Digitalwandler 41 zugeführt. Der Digitalausgang des Wandlers 41 ist dem einen Eingang einer Additionseinheit 43 zugeführt. Ueber einen Eichschalter $S_E$ ist der Ausgang des Wandlers 41 kurzzeitig mit einem Speicher 45 verbindbar, der den dann am Ausgang des Wandlers 41 vorliegenden Wert aufnimmt, bei ruhender Vorrichtung somit entsprechend dem Winkelwert $\alpha_o$ von Fig. 3.

Der Ausgang des Speichers 45 wird an der Additionseinheit 43 vom Ausgangssignal des Analog/Digitalwandlers 41 subtrahiert, so dass an deren Ausgang ein der Winkelgrösse $\alpha-\alpha_o$ entsprechendes Signal erscheint. Dieses Signal wird einer Sinusfunktionseinheit 47 zugeführt, die an ihrem Ausgang ein Signal entsprechend der Funktion $\sin(\alpha-\alpha_o)$ erzeugt. Dieses Signal wird dem einen Eingang einer Gewichtungseinheit 49, wie einer digitalen Multiplikationseinheit zugeführt. Das Ausgangssignal des Analog/Digitalwandlers 41 wird weiter einer Linearisierungs-Funktionseinheit 51 zugeführt, die entsprechend Formel (9) die Linearisierungsfunktion $H(\alpha)$, entsprechend

$$H(\alpha) = \frac{\cos \beta_1}{\cos(\beta_1 + \gamma - \alpha)} \qquad (10)$$

mit

$$\beta_1 = \text{arc } \sin\left(\frac{l_4 - l_1 \cos(\gamma - \alpha)}{l_2}\right) \qquad (11)$$

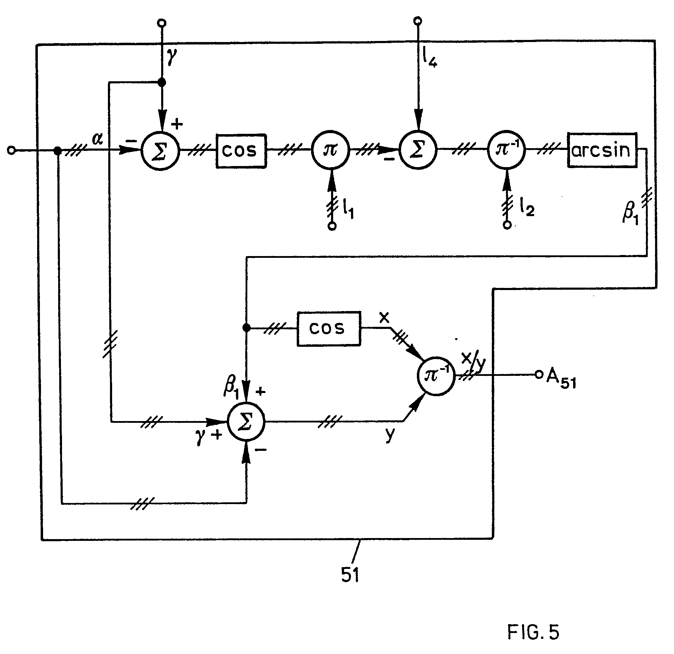

ermittelt. Der Aufbau der Linearisierungs-Funktionseinheit 51, d.h. die schaltungs- resp. funktionsblockmässige Realisierung dieser Funktion ist in Fig. 5
dargestellt, die unter Berücksichtigung von (10) und
(11) wohl keiner weiteren Erläuterungen bedarf. Es
versteht sich von selbst, dass alle Signalpfade digitale Mehrleitungspfade sind, wie mit den dreifach
gestrichenen Leitungen angedeutet. Der Ausgang der
Linearisierungs-Funktionseinheit 51, $A_{51}$ wird dem
zweiten Eingang der Gewichtungseinheit 49 zugeführt
und multiplikativ mit dem Ausgang der Sinusfunktionseinheit 47 verbunden. Der Ausgang der Gewichtungseinheit
49 ist über eine weitere Gewichtungseinheit 53, worin
sie mit der Pendelkonstanten K, insbesondere deren
Gewichtsgrösse gekoppelt, der Anzeige 21 zugeführt
und einem nachgeschalteten Drucker 57 zugeleitet, gegebenenfalls über eine Statistikeinheit 55. Das
Festhalten des Bruchbelastungswertes wird, wie anhand
von Fig. 2 erläutert worden ist, beispielsweise durch
Detektion der Bruchunstetigkeit im Verlauf der Winkelgrösse $\alpha$ erzielt, indem bei Auftreten des anhand von
Fig. 2 erläuterten Kriteriums, beispielsweise an der
Anzeige, mit einem Haltesignal $H\left(\frac{dU}{dt}B\right)$ eingegriffen
wird.

Anhand von Fig. 6 soll nun erläutert werden, wie mit Hilfe der Wegerfassung, wie anhand der bisherigen Figuren erläutert worden ist, die Steuerung der Backenbewegungen erfolgt. Der Ausgang des Wegdetektors 17 ist dem Eingang $E_{59}$ eines Speicherelementes 59 zugeführt. Ueber die bereits anhand von Fig. 2 beschriebene Differenziationseinheit 23, den Komparator 25, wo die momentane zeitliche Ableitung des Ausgangssignals des Detektors 17 mit einer vorgegebenen, bruchspezifischen Ableitung resp. Unstetigkeit $\frac{dU}{dt}B$ verglichen wird, eingebbar an einer Einheit 24, wird der Ladezeitpunkt des Speichers 59 durch Erscheinen eines Ladesignals L festgelegt, mit anderen Worten wird dem Speicher 59 ein Signal eingegeben, das dem Verschiebungsweg der kraftbeaufschlagten Backe 7 bis zum Bruchzeitpunkt entspricht. Der Ausgang $A_{59}$ des Speichers 59 wird einem Eingang $X_{61}$ einer Gewichtungseinheit 61 zugeführt, der auf einem zweiten Eingang $Y_{61}$ ein einstellbares, der Rückholgeschwindigkeit $v_{R1}$ der getriebenen Backe 1 entsprechendes Signal eingegeben wird. Die Gewichtungseinheit 61, als Quotientenbildner ausgebildet, gibt ein Ausgangssignal ab, das dem Quotienten aus Bruchverschiebungsweg am Ausgang $A_{59}$ des Speichers 59 und Rückholgeschwindigkeit $v_{R1}$ der Backe 1 entspricht. Es versteht sich von selbst, dass auch die Zeitspanne direkt gemessen und entsprechend abgespeichert werden kann, die, bei bekannten Vorschubgeschwindigkeitsverhältnissen, dem Verschiebungsweg der Backe 7 bis zum Bruch entspricht. Generell können alle beschriebenen Wegmesseinrichtungen, bei Kenntnis der Vorschubgeschwindigkeiten, Zeitmesseinrichtungen sein oder umfassen.

Das obgenannte Ausgangssignal wird einer Zeitsteuereinheit 63 zugeführt, die einen Ausgangsimpuls abgibt, von einer Impulsdauer, $\tau_1(^x/y)$, die dem Ausgangssignal der Gewichtungseinheit 61 entspricht, d.h. der Zeitdauer entspricht, die, die Backe 1 bei gegebener Rückholgeschwindigkeit $v_{R1}$ zum Durchlaufen des Bruchweges benötigt. Der Ausgangsimpuls der Zeitsteuereinheit 63 wird extern um eine vorgebbare Zeitgrösse $\Delta$ verlängert und wirkt über einen Steuerschalter $S_{R1}$, solange aktivierend auf einen Rückhol-Steuereingang R des Motors 5, wie dies durch den Ausgangsimpuls der Zeitsteuereinheit 63, verlängert um die eingebbare Zeitdauer $\Delta$ gegeben ist. Während dieser Zeit liegt am Rückholsteuereingang R des Motors 5 ein der eingegebenen Rückholgeschwindigkeit $v_{R1}$ entsprechendes Steuersignal an, mit anderen Worten wird die Backe 1 während dieser Zeit mit vorgegebener Geschwindigkeit $v_{R1}$ rückgeholt mithin um den Bruchverschiebungsweg und einen mit der Zeitgrösse $\Delta$ eingegebenen zusätzlichen Verschiebungsweg. Der zusätzliche Verschiebungsweg entsprechend der eingegebenen Pulsverlängerung $\Delta$ wird nach den Toleranzen der Probe 15 ermittelt und berücksichtigt einen einzuhaltenden Handhabungsabstand zum Einleger der nächsten Probe zwischen die Backen 1 und 7.

Auf diese Art und Weise wird somit die Rückholbewegung der getriebenen Backe 1 aus der Verschiebungswegerfassung der Backe 7 gesteuert.

Um nun den Annäherungsvorschub der getriebenen Backe 1 ab Verschiebungsbeginn bis zum Berühren der Probe 15 zu steuern, um diesen Arbeitszyklus zeitoptimal auszuführen und um einen zu grossen Auftreffimpuls der Backe 1 auf die Probe 15 zu verhindern, wird über die Differenziationseinheit 21 der Beginn der Verschiebung der kraftbeaufschlagten Backe 7 ermittelt,

indem wiederum an einer Komparatorschaltung 65 die momentane zeitliche Ableitung des Verschiebungsweges mit einer vorgegebenen Ableitung verglichen wird. Hier ist die vorgegebene zeitliche Ableitung $\frac{dU}{dt}ST$ der Nullwert, indem detektiert werden muss, wann die Backe 7 aus dem Stillstand beschleunigt.

Der Vorschub der getriebenen Backe 1 wird durch einen Startschalter $S_o$ ausgelöst, indem ein Vorschub-Steuereingang für den Motor 5 aktiviert wird. Gleichzeitig wird mit Schliessung des Steuerschalters S' ein Zähler 67 rückgesetzt und zum Zählen freigegeben und zählt anschliessend die Impulse eines Taktoszillators 69. Sobald das Ausgangssignal des Komparators 65 anzeigt, dass die Backe 7 sich in Bewegung setzt, somit die Backe 1 die Probe 15 berührt hat, wird der Zähler 67 stillgesetzt, gleichzeitig der Zählerausgang $A_{67}$ in einen Speicher 71 geladen, durch Aktivierung eines Lade-Einganges $L_{71}$. Der nun im Speicher 71 geladene Wert entspricht dem Zeitraum, den die Backe 1 ab Vorschubbeginn bis zum Berühren der Probe gebraucht hat. Mit diesem Wert, ausgangsseitig des Speichers 71, wird eine Decoder-Multiplexschaltung 73 angesteuert. Die Decoder-Multiplexschaltung 73 schaltet mehrere einstellbare vorschubgeschwindigkeits-entsprechende Signale $S(v_a)$, $S(v_b)$ etc. auf ihren Ausgang $A_{73}$ in einer durch das Ausgangssignal des Speichers 71 gesteuerten zeitlichen oder der momentanen Backenposition entsprechenden Abfolge. Der Ausgang der Decoder-Multiplexschaltung 73 ist über einen Schalter $S_1$ auf eine Additionseinheit 75 geführt, deren Ausgang über den Schalter S' auf den Vorschub-Steuereingang des Motors 5 wirkt. Der Additionseinheit 75 ist weiter ein einstellbares Signal $V_v$ zugeführt, über einen Schalter $S_2$, wobei dieses Signal $V_v$ der Vorschubgeschwindigkeit der Backe 1 nach Berühren der Probe 15 entspricht, d.h. die eigentliche Beanspruchung der Probe 15 steuert. Während nach Betätigen des Vorschub-Auslöseschalters S' der Schalter $S_1$ geschlossen wird und der Schalters $S_2$ geöffnet, wird bei Detektion des Verschiebungsbeginns der Backe 7 der Schalter $S_1$ geöffnet und der Schalter $S_2$ geschlossen. Somit wird die Vorschubgeschwindigkeit der Backe 1 vor Berühren der Probe 15 durch den Ausgang der Decoder-Multiplexschaltung 73 angesteuert, danach durch die vorgegebene Vorschubgeschwindigkeit entsprechend dem Signal $V_v$.

In Fig. 6a sind beispielsweise zwei Verläufe des Decoder-Multiplex-Einheits-Ausgangssignals in Funktion zweier unterschiedlicher, im Speicher 71 abgespeicherten Zeitwerte dargestellt. Ist im Speicher 71 eine Zeitspanne $T_{11}$ abgespeichert, gefunden bei der Prüfung einer Probe, so steuert der Decoder-Multiplexer 73 die Vorschubgeschwindigkeit bei der nächsten Probe entsprechend der Kurve $V_1$. In einer ersten Phase $T_{a1}$ wird die Backe 1 mit hoher Geschwindigkeit $x_1$ gemäss eingegebenem Signal $S(v_a)$ vorgetrieben, in einer zweiten $T_{b1}$ mit geringerer und während der letzten Phase $T_{c1}$ bis zum Berühren der Probe 15 mit sehr geringer, um den Auftreffimpuls zu minimalisieren. Selbstverständlich kann diese Geschwindigkeit-Zeitfunktion auch kontinuierlich abnehmend mit erwünschter Charakteristik realisiert werden. Ist gemäss Fig. 6a bei der einen Probe eine Zeitspanne $T_{12}$ bis zum Berühren der Probe ermittelt worden, so steuert die Decoder-Multiplexschaltung 73 den Vorschub der Backe 1, bei der nächsten Probe beispielsweise entsprechend $V_2$ an, indem entsprechend der längeren Zeitspanne $T_{12}$ und damit dem offensichtlich längeren Vorschubweg während längeren Zeitspannen $T_{a2}$, $T_{b2}$ mit hoher Geschwindigkeit $V_a$ und mittlerer Geschwindigkeit $v_b$ vorgeschoben wird und wiederum erst kurz vor Berühren der Probe 15 auf tiefste Geschwindigkeit $v_c$ abgebremst wird.

Für den ersten Durchlauf nach Inbetriebnahme des Gerätes kann der Speicher 71, wie mit der Eingabeeinheit 77 angedeutet, gesetzt werden.

Es versteht sich nun von selbst, dass auch generell ein Geschwindigkeitsprofil nach dem Vorschubweg S angesteuert und adaptiv optimiert werden kann. Hinzu muss nicht notwendigerweise die Position der Backe 1 erfasst werden. Das Adaptieren kann bei fester zeitlicher Vorschubgeschwindigkeitsabfolge dadurch erfolgen, dass der Rückholweg der Backe 1 verstellt wird und aus der jeweiligen Startposition dieser Backe mit dem vorgegebenen Geschwindigkeits-Zeitprofil gesteuert wird. Damit wird eine Verstellung des Vorschubgeschwindigkeits/Vorschubwegprofils erreicht. Fig. 6a bleibt mit der Horizontalachse für den absoluten Backen-Verschiebungsweg $S_1$ gültig. Zur Adaptierung wird das ganze $V_1$-Profil in den neuen Backen-Startpunkt $S_{02}$ verlegt, wie strichpunktiert dargestellt.

Ist der Probenbruch erfolgt, so wird die kraftbeaufschlagte Backe 7 entsprechend ihrer dann eingenommenen Lage mit der Kraft des Krafterzeugungsorgans 13 gemäss Fig. 1 rückgetrieben, was, je nach den vorgesehenen Massen, zu grossen mechanischen Beanspruchungen führen kann. Betrachtet man beispielsweise das Schwerependel als bevorzugtes Krafterzeugungsorgan, so ist ersichtlich, dass dieses nach Auftreten des Bruchs zurückschwingen wird, über die Nullposition hinausschwingen und dabei die Backe 7 auf die Backe 1 treiben kann, und dass generell die ganze Prüfvorrichtung grossen Belastungen unterworfen werden kann.

Um dies zu verhindern wird gemäss Fig. 7 in bereits anhand der Figur 1 und 2 dargestellten Weise über den Wegdetektor 17, die Differenziationseinheit 23 den nachgeschalteten Komparator 25, an welchem die momentane zeitliche Aenderung des Verschiebungsweges der Backe 7 mit der bruchspezifischen eingebbaren $\frac{dU}{dt}B$ verglichen wird, nach Auftreten des Bruches ein bistabiles Element 81 gesetzt und schliesst einen Verbindungsschalter $S_3$, welcher den Ausgang des Wegdetektors 17 auf eine Brems-Steuereinheit 83 schaltet. Die Brems-Steuereinheit 83 wirkt ausgangsseitig auf eine auf die Backe 7 wirkende, in Fig. 7 schematisch dargestellte Bremse 85, so dass letztere in Funktion des Ausgangssignals des Wegdetektors 17 die Backe 7 bremst. Die Abhängigkeit der Bremskraft $F_{BR}$ vom Verschiebungsweg S', detektiert durch den Detektor 17, ist beispielsweise in Fig. 9 dargestellt, woraus ersichtlich ist, dass im Moment des Bruches, d.h. bei einem Verschiebungsweg $s'_B$, eine hohe Bremskraft auf die Backe 7 ausgeübt wird, die stetig, mit abnehmendem Verschiebungsweg mit Bezug auf die Backen-Nullposition reduziert wird, so dass die Backe 7 stetig ohne Ueberschwingen in ihre Nullposition mit S' = 0 übergeführt wird.

Gemäss Fig. 9 wird dies bei einer Vorrichtung, bei
der gemäss Fig. 3 das Krafterzeugungsorgan 13 gemäss
Fig. 1 durch ein Schwerependel 35 realisiert ist,
so ausgeführt, dass das am Potentiometer 39 abgegriffene Signal A über die Differenziationseinheit 23
den Komparator 25, bei Detektion des Bruches ein bistabiles Element, wie ein Flip-Flop 81 setzt,
welch letzteres analog zu Fig. 7 den Schalter $S_3$
dann schliesst. Ueber die Brems-Steuereinheit 83,
welcher dann das Ausgangssignal A des Potentiometers
39 zugeschaltet ist, wird mit vorgegebener Abhängigkeit
vom Winkel $\alpha$ eine Tauchspule 85 erregt, mittels welcher
eine Bremsplatte 87 erst stark, mit abnehmendem Winkel $\alpha$
zunehmend weniger stark, gegen das Pendel 35 gepresst wird, wobei die Platte 87 parallel zur Pendelebene E liegt und senkrecht dazu gegen das Pendel
35 gepresst wird. Auf diese Art und Weise ist es möglich, auch schwere Pendelmassen rasch und trotzdem
optimal gedämpft in die Null-Lage zurückzuführen.

Es versteht sich von selbst, dass die anhand von Fig.
7 und 8 erläuterte Bremsvorrichtung resp. das entsprechende Bremsverfahren vorteilhafterweise in Kombination mit den anhand der vorangegangenen Figuren erläuterten Merkmale der Vorrichtungen realisiert wird.

Anstelle der wegabhängigen Steuerung über eine Wegerfassung vorgesehener Bremsorgane für die Rückholbewegung der Belastungsbacke ist es auch durchaus möglich, und in manchen Fällen einfacher, ein Bremsorgan vorzusehen, welches nach einer festen Bremskraft-Verschiebungswegfunktion eine variable Bremskraft auf die Belastungsbacke ausübt, nach einer vorgegebenen Zeitfunktion.

In Fig. 10 ist eine solche Anordnung dargestellt. Das in Analogie zu Fig. 8 dargestellte Pendel 35 mit der Belastungsbacke 7, wie bereits oben beschrieben, gekoppelt, wirkt mit einer Bremsplatte 90 zusammen, welche an einem Gelenk 92 gelagert ist, dessen Schwenkachse parallel zur Pendel-Schwenkebene E liegt.

Mit ausgezogenem Strich ist das Pendel 35 in ausgelenkter Position dargestellt. Dann liegt die Platte 90 in einem Bereich $P_1$ am Pendel an. Entsprechend dem Gewicht der Platte 90 und dem Hebelarm zwischen dem Anliegepunkt $P_1$ und der Achse 92 übt die Platte 90 dann einen relativ starken Bremsdruck auf das Pendel 35 aus. Das Pendel 35 rutscht langsam in die gestrichelt eingetragenen Positionen, d.h. gegen seine Ruheposition. Mit abnehmender Auslenkung verschiebt sich auch der Auflagepunkt der Platte 90 an den Pendel 35, beispielsweise in $P_2$, und damit wird auch der Hebelarm zwischen diesem Auflagepunkt, hier $P_2$, und Achse 92 zunehmend länger, damit der durch die Platte 90 ausgeübte Bremsdruck zunehmend geringer wird, bis, wenn das Pendel 35 seine Ruheposition erreicht hat, Platte 90 auf das Pendel nur noch eine minimale, vorgegebene Kraft ausübt. Bei Backenvorschub wird die Bremse generell gelöst, gemäss Fig.10 die Platte 90 weggeschoben.

- 29 -

Patentansprüche:

1.Verfahren zur Prüfung der mechanischen Beanspruchbarkeit einer Materialprobe, bei welchem über die Probe die Bewegung zweier Backen (1, 7) gekoppelt wird und die eine Backe (7) als Belastungsbacke mit einer mit ihrer Lage variierenden Kraft (F) auf die Probe rückwirkt, dadurch gekennzeichnet, dass man den Verschiebungsweg (s') mindestens einer der Backen (7) bestimmt und aus der Kenntnis der Lage-Kraftabhängigkeit der Belastungsbacke, mindestens unmittelbar vor dem Probenbruch die dann auf die Probe rückwirkende Kraft (F) berechnet und/oder aus der Verschiebungswegerfassung und allenfalls Kenntnis der Geschwindigkeitsverhältnisse der einen und/oder anderen Backe, deren Bewegung steuert.

2. Verfahren vorzugsweise nach mindestens einem der Ansprüche, wie nach Anspruch 1 ,dadurch gekennzeichnet, dass man den Bruch durch Detektion einer vorgegebenen zeitlichen Unstetigkeit des erfassten Verschiebungsweges detektiert.

3. Verfahren vorzugsweise nach mindestens einem der Ansprüche, wie nach Anspruch 1 oder 2, dadurch gekennzeichnet, dass man aus der Bestimmung des Verschiebungsweges (s') der einen Backe (7) bis unmittelbar vor Probenbruch und Vorgabe der Rückholgeschwindigkeit der anderen Backe (1) über die Ermittlung deren Rücklaufzeit (63) ihren Rücklauf steuert.

4. Verfahren vorzugsweise nach mindestens einem der Ansprüche, wie nach Anspruch 3, dadurch gekennzeichnet, dass man die Rücklaufzeitspanne der anderen Backe (1) berechnet, eine Toleranzzeitspanne ($\Delta$) wie entsprechend der geometrischen Probenausdehnungs- und der Bruchwegtoleranz hinzudaddiert und während der Totalzeitspanne die andere Backe (1) rückholt.

5. Verfahren vorzugsweise nach mindestens einem der Ansprüche, wie nach einem der Ansprüche 1 bis 4, dadurch gekennzeichnet, dass ein Geschwindigkeits/ Vorschubweg- oder- Vorschubzeit—Profil($v_1$) der anderen Backe (1) für ihren Vorschub bei einer Probe vorgibt und das Profil nach Massgabe eines Backen/Probenkontaktierungs- Kriteriums bei dieser Probe für die nächste Probe adaptiv optimiert.

6. Verfahren vorzugsweise nach mindestens einem der Ansprüche, wie nach einem der Ansprüche 1 bis 5, dadurch gekennzeichnet, dass man ein Geschwindigkeits/Vorschubweg- oder -/Vorschubzeit—Profil ($v_1$) der anderen Backe (1) für ihren Vorschub bei einer Probe vorgibt, deren Verschiebungsbeginn-Zeitpunkt (67) registriert, einen Zeit-Punkt bei oder nach Verschiebungsbeginn der Belastungsbacke (7) registriert (67) und adaptiv für die nächste Probe, unter Berücksichtigung von Probentoleranzen aus Kenntnis der Zeitpunktdifferenzspanne und des Profils ($v_1$) bei der einen Probe, das Profil ($v_2$) für die nächste Probe korrigiert, zur Zeitoptimierung des Vorschubes der anderen Backe (1) und Einhaltung eines vorgegebenen Berührungsimpulses zwischen den Backen (1, 7) und der jeweiligen Probe.

7. Vorrichtung vorzugsweise nach mindestens einem der
Ansprüche, wie zur Ausführung des Verfahrens nach Anspruch 1, wobei eine Belastungsbacke (7) mit einem lageabhängig krafterzeugenden Organ (13) gekoppelt ist,
dadurch gekennzeichnet, dass mindestens der einen Backe
(7) eine Wegmesseinrichtung (17) zur Direktmessung des
Weges oder zur Verschiebungszeitmessung und via Geschwindigkeit zur indirekten Wegmessung zugeordnet ist.

8.Vorrichtung vorzugsweise nach mindestens einem der Ansprüche, wie nach Anspruch 7, dadurch gekennzeichnet,
dass der Ausgang der Wegmesseinrichtung (17) einer als
Funktionsgenerator wirkenden Auswerteeinheit (19) als
Eingang zugeführt ist, wobei die Auswerteeinheit (19)
ein der auf  die Balastungsbacke (7) wirkenden Kraft (F)
proportionales Signal in Funktion des Wegmesseinrichtungs-
Ausgangssignals (U(s'))abgibt.

9. Vorrichtung vorzugsweise nach mindestens einem der
Ansprüche, wie nach Anspruch 7 oder 8, dadurch gekennzeichnet, dass das krafterzeugende Organ ein durch Verschiebung der Belastungsbacke (7) aus der Vertikalen
aufgeschwenktes Schwerependel (35) ist.

10. Vorrichtung vorzugsweise nach mindestens einem der
Ansprüche, wie nach Anspruch 9, dadurch gekennzeichnet,
dass die Wegmesseinrichtung ein Winkelaufnehmer (39)
am Pendel (35) ist.

11. Vorrichtung  vorzugsweise nach mindestens einem der
Ansprüche, wie nach Anspruch 10, dadurch gekennzeichnet,
dass die Auswerteeinheit eine Sinus-Funktionseinheit
(47) umfasst, deren Eingang mit dem Ausgang des Winkelsaufnehmers (39)verbunden ist.

12. Vorrichtung vorzugsweise nach mindestens einem der Ansprüche, wie nach Anspruch 11, dadurch gekennzeichnet, dass die Auswerteeinheit (19) eine der Sinus-Funktionseinheit (47) vorgeschaltete Ueberlagerungseinheit (43) umfasst, an der dem Ausgangssignal des Winkelaufnehmers (39) ein einer Offset-Winkelgrösse ($\alpha_o$)entsprechendes Signal hinzuaddiert wird, zur Berücksichtigung der relativen Winkellage zwischen Backen-Bewegungsbahn und Vertikalen.

13. Vorrichtung vorzugsweise nach mindestens einem der Ansprüche, wie nach Anspruch 12, dadurch gekennzeichnet, dass die Auswerteeinheit (19) ein Speicherelement (45) für das Offset-Winkelgrössen-Signal ($\alpha_o$)umfasst, wobei vorzugsweise dieses Signal in Ruhelage der Vorrichtung vom Ausgang des Winkelaufnehmers (39) als Eichgrösse aufnehmbar ist.

14.Vorrichtung vorzugsweise nach mindestens einem der Ansprüche, wie nach einem der Ansprüche 11 bis 13, wobei die Balastungsbacke (7) mittels einer Umlenkmechanik (11, 31) mit dem Pendel (35) bewegungsgekoppelt ist, dadurch gekennzeichnet, dass die Auswerteeinheit (19) eine Linearisierungs-Funktionseinhe t (51) umfasst, der das Ausgangssignal des Winkelaufnehmers (39) zugeführt ist, und deren Ausgangssignal als schwenkwinkelabhängigger Faktor mit dem Ausgangssignal der Sinus-Funktionseinheit (47) an einer Gewichtungseinheit (49) verbunden ist.

15. Vorrichtung vorzugsweise nach mindestens einem der Ansprüche, wie nach einem der Ansprüche 7 bis 14, dadurch gekennzeichnet, dass der Ausgang der Wegmesseinrichtung (17), entsprechend dem durch die Belastungsbacke (7) bis zum Probenbruch durchlaufenen Weg oder der dafür benützten Zeitspanne, bei gegebenem Geschwindigkeitsverlauf, und dass der Ausgang der Speichereinrichtung (59), über eine Gewichtungseinheit (61) der als Gewichtungsfaktor ein der Rückholgeschwindigkeit der anderen Backe (1) entsprechendes Signal ($V_{R1}$) zuführbar ist, an einen Zeit- oder Wegsteuereingang (63) für einen Antrieb (5) für die andere Backe (1) geführt ist und deren Rückholung steuert.

16. Vorrichtung vorzugsweise nach mindestens einem der Ansprüche, wie nach Anspruch 15, dadurch gekennzeichnet, dass eine einstellbare Verstelleinrichtung (64) vorgesehen ist, um den Rückholweg extern zu verlängern ($\Delta$).

17. Vorrichtung vorzugsweise nach mindestens einem der Ansprüche, wie nach einem der Ansprüche 7 bis 16, dadurch gekennzeichnet, dass eine Zeitmesseinrichtung (67) den Zeitabschnitt zwischen Verschiebungsbeginn der anderen Backe (1) und einem bei oder nach demjenigen der Belastungsbacke (7) bei Prüfung einer Probe registriert und festhält (71), dass der Ausgang der Zeitmesseinrichtung auf eine Geschwindigkeit/Vorschubweg- oder -/Vorschubzeit-Steuereinheit (73) für einen Antrieb (5) für die andere Backe (1) wirkt, und dass die Zeitmesseinrichtung (67, 71) mit dem für die eine Probenprüfung ermittelten Zeitabschnitt ($T_{11}$) das Profil ($v_2$) der anderen Backe (1) bei der nächsten Probenprüfung steuert.

18. Verfahren zum Rückholen einer, eine Materialprobe belastenden Backe bei einem Prüfgerät, bei dem über eine Probe die Bewegung zweier Backen gekoppelt wird, und die Balastungsbacke mit einer mit ihrer Lage variierenden Kraft auf die Probe rückwirkt, oder vorzugsweise nach mindestens einem der Ansprüche, wie der Ansprüche 1 bis 6,dadurch gekennzeichnet,dass man den Bruch der Probe detektiert, und die Belastungsbacke (7) mit gesteuerter oder geregelter Beschleunigung ($F_{Br}$) in ihre Ruhelage rückführt.

19. Verfahren vorzugsweise nach mindestens einem der Ansprüche, wie nach Anspruch 18, dadurch gekennzeichnet, dass man die Beschleunigung ($F_{Br}$) abhängig vom Verschiebungsweg der Belastungsbacke steuert.

20. Verfahren vorzugsweise nach mindestens einem der Ansprüche, wie nach Anspruch 18, dadurch gekennzeichnet, dass man den Verschiebungsweg (s') der Belastungsbacke (7) bereits vor dem Probenbruch detektiert und letzteren durch Auftreten einer vorgegebenen zeitlichen Unstetigkeit im Backenverschiebungsweg erfasst.

21. Vorrichtung vorzugsweise nach mindestens einem der Ansprüche, wie zur Ausführung des Verfahrens nach Anspruch 18, dadurch gekennzeichnet,dass für die Belastungsbacke (7) eine Rückhol-Beschleunigungs-Steuervorrichtung (83) vorgesehen ist, oder eine Rückhollage-Regelung vorzugsweise mit der Vorrichtung als Stellglied.

22. Vorrichtung vorzugsweise nach mindestens einem der Ansprüche, wie nach Anspruch 21, dadurch gekennzeichnet, dass die Steuervorrichtung eine Bremsvorrichtung ist, die eine von der Backenlage abhängige Bremskraft ausübt, oder eine Bremskraft vorgegebener Zeitabhängigkeit erzeugt.

23. Vorrichtung vorzugsweise nach mindestens einem der Ansprüche, wie nach einem der Ansprüche 7 bis 17, dadurch gekennzeichnet, dass der Ausgang (A) einer Wegmesseinrichtung (39) mindestens zeitweilig auf einen Steuereingang einer Beschleunigungs-Steuervorrichtung (83) für die Belastungsbacke (7) wirkt.

24. Vorrichtung vorzugsweise nach mindestens einem der Ansprüche, wie nach einem der Ansprüche 21 bis 23, dadurch gekennzeichnet, dass das krafterzeugende Organ ein durch Verschiebung der Belastungsbacke (7) aus der Vertikalen aufgeschwenktes Schwerependel (35) ist und die Beschleunigungs-Steuervorrichtung eine am Pendel angreifende Bremse ist, die vorzugsweise eine in einer Ebene parallel zur Pendelschwenkebene (E) an letzterem angreifende Friktionsplatte (87) umfasst, mindestens in einer Komponente senkrecht zu dieser Ebene (E) verschieblich.

25. Vorrichtung vorzugsweise nach mindestens einem der Ansprüche, wie nach den Ansprüchen 23 und 24, dadurch gekennzeichnet, dass die Platte (87) mit einem steuerbaren Antrieb (85) verbunden ist und die Wegmesseinrichtung (39) ein Winkelaufnehmer am Pendel ist oder dass eine Zeitsteuereinheit zur Steuerung einer vorgegebenen Zeitfunktion der Bremskraft vorgesehen ist.

26. Vorrichtung vorzugsweise nach mindestens einem der Ansprüche, wie nach Anspruch 25, dadurch gekennzeichnet, dass der Wegaufnehmer mit einer Differenziationseinheit (23) verbunden ist, deren Ausgang einer Komparatorschaltung zugeführt ist, vorzugsweise mit einstellbarem Referenzwert, und dass der Ausgang der Komparatorschaltung (23) die Bremse (87, 85) sperrt oder für die gesteuerte Inbetriebnahme (83) freigibt.

0156186

27. Verfahren vorzugsweise nach mindestens einem der Ansprüche, wie nach einem der Ansprüche 1 bis 6, 18 bis 20, dadurch gekennzeichnet, dass man für Druck/Weg- oder Druck/Weg/Zeit-Materialprüfung den Verschiebungsweg beider Backen misst.

28. Vorrichtung vorzugsweise nach mindestens einem der Ansprüche, wie nach einem der Ansprüche 7 bis 17, 21 bis 26, dadurch gekennzeichnet, dass beiden Backen (1,7) je eine Wegmesseinrichtung (17, 17') zugeordnet ist.

29. Verwendung des Verfahrens oder der Vorrichtung vorzugsweise nach mindestens einem der Ansprüche zur Prüfung von Tabletten.

0156186

FIG.1

FIG.2

FIG.3

FIG.4

0156186

FIG. 5

FIG.6

5/8

0156186

0156186

FIG.6a

FIG.7

0156186

FIG.8

FIG.9

0156186

FIG. 10

Europäisches
Patentamt

**EUROPÄISCHER RECHERCHENBERICHT**

**0156186**
Nummer der Anmeldung

EP 85 10 2354

## EINSCHLAGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| A | FR-A-2 111 397 (HEBERLEIN & CO.) <br> * Seite 2, Zeile 32 - Seite 4, Zeile 9; Figuren 1-3 * & CH - A - 523 499 (Kat. D,A) <br><br> --- | 1 | G 01 N 3/08 |
| A | US-A-3 610 034 (K.M. GUNN u.a.) <br> * Spalte 1, Zeilen 12-19; Spalte 8, Zeile 42 - Spalte 10, Zeile 27; Figur 1 * <br><br> --- | 1 | |
| A | US-A-4 022 056 (L.C. BARLAND) <br> * Spalte 6, Zeile 8 - Spalte 8, Zeile 31; Figur 1 * <br><br> --- | 1 | |
| A | US-A-3 858 442 (W. NOZAKI) <br> * Spalte 6, Zeile 56 - Spalte 7, Zeile 17 * <br><br> --- | 1 | **RECHERCHIERTE SACHGEBIETE (Int. Cl.4)** |
| A | FR-A-2 089 214 (SNAM PROGETTI) <br><br> ----- | | G 01 N 3/00 |

Der vorliegende Recherchenbericht wurde für alle Patentansprüche erstellt

| Recherchenort <br> DEN HAAG | Abschlußdatum der Recherche <br> 22-05-1985 | Prüfer <br> ANTHONY R.G. |
|---|---|---|